# EUROPEAN PATENT SPECIFICATION

(11) **EP 2 552 811 B1**
(45) Date of publication and mention of the grant of the patent: **11.02.2015**
(21) Application number: 11723728.9
(22) Date of filing: 31.03.2011
(51) Int. Cl.: B65G 69/00

(54) **DOCK SHELTER**
DOCKSCHUTZ
ABRI DE QUAI DE CHARGEMENT

(30) Priority: 01.04.2010 NL 1037849
(43) Date of publication of application: 06.02.2013
(73) Proprietor: Hörmann Alkmaar BV, 1800 GC Alkmaar (NL)
(72) Inventor: STROET, Franciscus, Johannes, NL-1704 VZ Heerhugowaard (NL)
(74) Representative: Koomen, M.J.I.
(86) International application number: PCT/NL2011/000023
(87) International publication number: WO 2011/122940

(56) References cited:
- EP-A1- 0 493 713
- EP-A2- 0 258 779
- WO-A2-2009/011568
- GB-A- 1 509 935
- US-A- 2 567 995

## Description

The present invention relates to a dock shelter according to the preamble of claim 1.

Such a dock shelter is known from GB 1 509 935.

The known dock shelter is intended to form a more or less watertight seal between the back side of the cargo space of a truck and the front opening in the façade of the building into which the cargo from the truck has to be transferred, to which end the sides and the roof of the shelter are covered with a cloth. With a known shelter the front frame parts are connected to the façade by means of hinging arms to guard against or minimize damage in the case the truck is not correctly placed in the front opening. When a truck drives for instance against a side the arms with the front frame parts connected thereto can be pushed away, whereby, by means of the hinging arm, a movement slanting upwards in the direction of the façade, takes place.

The known shelter has the drawback, that when a truck is standing still in front of the front opening and is unloaded damage can still occur to the shelter and/or the truck. When the cargo is unloaded from the truck the truck will, due to the fact that it is loaded less heavy, spring upwards. The roof of the truck thereupon pushes against the roof of the shelter, which movement the shelter cannot follow.

From the International patent application publication number WO2009/011568 is known a dock shelter in which the arms are connected to the façade and/or the front frame parts via a pin that is movable in a vertical slot, in such a way that the front frame parts are movable in a vertical direction, parallel to the facade. Because with the dock shelter described in this publication the front frame parts can move straight upwards, that is to say in a direction upwards, parallel to the façade, the shelter can move along with a van that is springing upwards. Damage to the dock shelter and the van in this manner is prevented or limited.

The invention aims to provide a dock shelter having a more simple construction, in which it is not necessary to make use of a construction in which the arms are connected to the façade and/or the front frame parts via a pin that is movable in a vertical slot, and by means of which it can as well be realized that the shelter can move along with a van that is springing upwards.

The shelter according to the invention is defined in claim 1.

According to a preferred characteristic of the dock shelter according to the invention the arm is formed out of at least two arm parts, in which a first arm part with an outer end is connected to the façade and a second arm part with an outer end is connected to a front frame part, in which the first and the second arm part are connected to each other, or, are connected to each other by means one or more further arm parts provided in between the first arm part and the second arm part, all in such a way, that the arm parts are displaceable relative to each other, and by means of which the length of the arm can be adjusted.

According to another preferred characteristic of the dock shelter according to the invention the arms are formed by a telescopic construction

According to a further preferred characteristic of the dock shelter according to the invention the arm parts are formed by metal strips or profiles.

The invention will now be described further with reference to the drawings of an example of an embodiment.
The figures 1 and 2 show perspective views of a truck that is busy parking at the front opening in the façade of a building in which the cargo from the truck has to be transferred.
Figure 3 shows a perspective view of the truck, on which is indicated by means of arrows a movement upwards of the truck as a result of the unloading of the cargo.
Figures 4 and 5 show side views of the truck in front of the front opening, in which the cloth that covers the side of the shelter is left out and in which a front frame part having two arms is visible, and whereby figure 4 by means of the arrow shows a movement of the truck in the direction towards the facade, and figure 5 by means of the arrow shows a movement of the truck upwards.
Figures 6, 7 and 8 shows side views of a rear frame part, a front frame part with in between two arms.

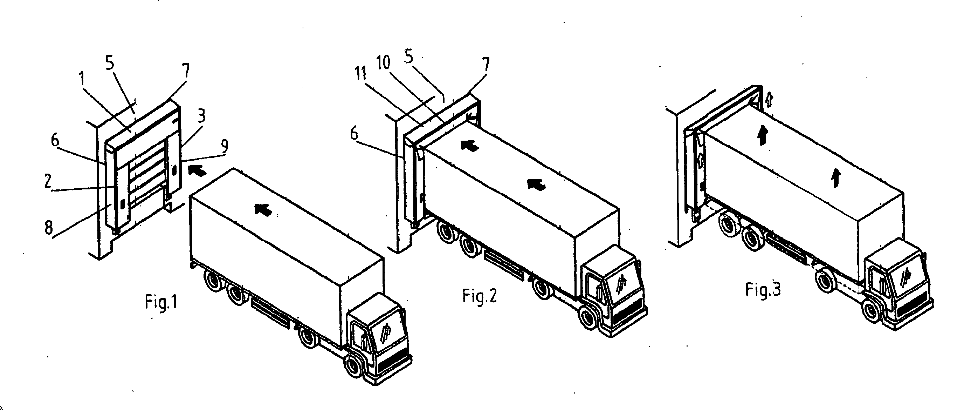

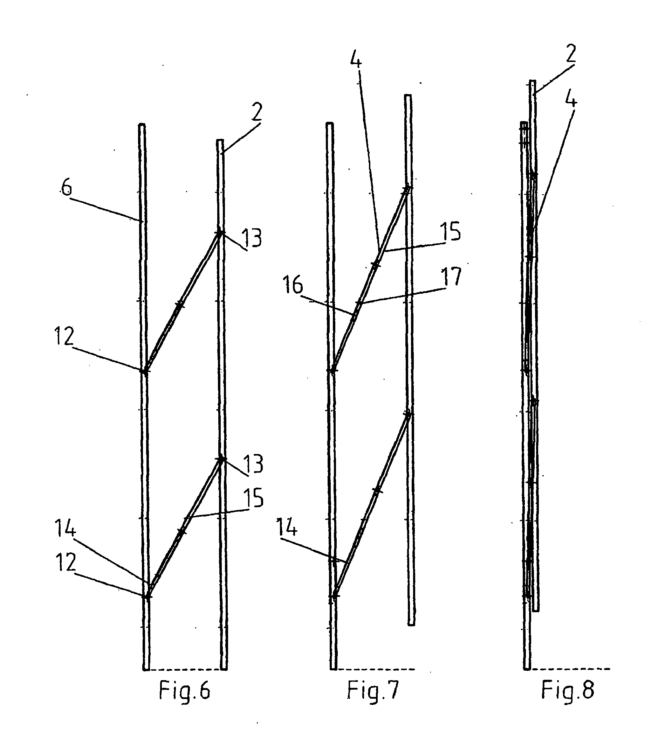

As is shown in the figures 1,2 and 3 the dock shelter 1 comprises two parallel and vertically arranged front frame parts 2, 3, which each, in this example of an embodiment, by means of two arms 4 (see figures 6, 7 and 8) are connected to two, likewise parallel and vertically arranged, rear frame parts 6, 7 mounted to the facade 5 (in the figures 1, 2 and 3 only the position of the rear frame parts 6, 7 covered by the cloth of the shelter, is indicated by an arrow 6, 7).

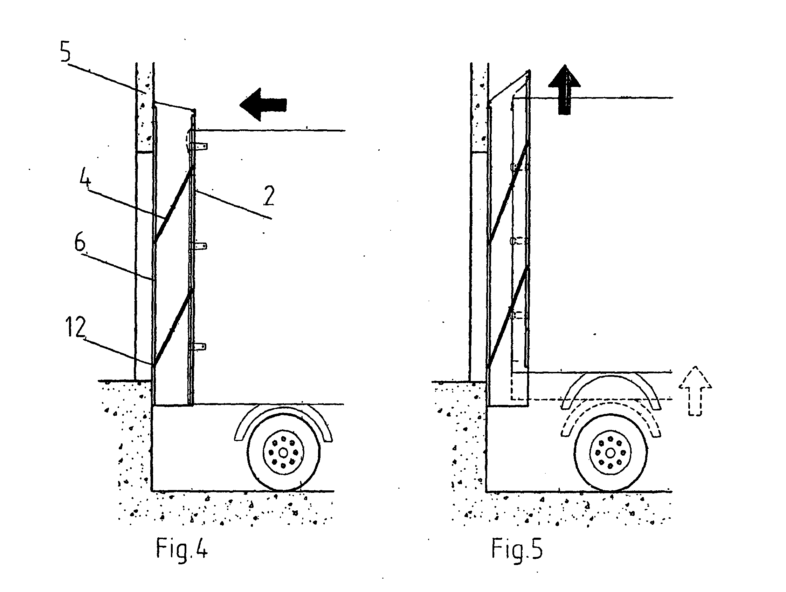

The left front frame part 2 is intended to form a supporting element for the left side 8 and the right front frame part 3 is intended to form a supporting element for the right side 9 of the shelter 1. In between the frame parts 2, 3 at the upper side thereof there is provided a supporting element 10 for the roof 11 of the shelter. As can be seen in the figures 4, 5, 6, 7 and 8 two arms 4 each at their one outer end 12 are connected to the left rear frame part 6 mounted to the façade and at their other outer end 13 are connected to the left front frame part 2. The arms 4 are rotatably connected to the rear frame part 6 respectively the front frame part 2, in such a way that the frame parts can be folded towards each other, as is shown in figure 8.

In the embodiment shown, see figure 7, the arms 4 of the dock shelter according to the invention are built up of two arm parts 14 and 15. A first arm part 14 comprises the outer end 12 by means of which it is connected to the rear frame part 6 that is mounted to the façade 5 and the second arm part 15 comprises the outer end 13 by means of which it is connected to the left front frame part 2. The first arm part 14 at its other outer end 16 is connected to the other outer end 17 of the second arm part 15, in which the second arm part 15 partially can take in the first arm part 14 whereby the first arm part 14 can be slided in and out of the second arm part 15, such as with a telescopic construction. The arms 4 can also be built up of more parts than the two parts shown in the example of an embodiment.

The extending arms 4 allow a horizontal movement as well as a vertical movement of the front frame parts 2, 3 , as can be seen in the figures 5, 7 and 8.

The dock shelter according to the invention allows for a standing truck to push the shelter in a direction parallel to the facade upwards along a given distance, without immediately causing damage.

As can be seen in the figures 1,2 and 3, the dock shelter comprises a left side 8 and a right side 9 and a roof 11. There is a cloth that extends from the façade 5 and which covers the rear frame parts 6, 7. By means of the covering a more or less watertight seal is formed between the rear side of the cargo space of the truck and the front opening in the façade 5 of the building into which the cargo from the truck has to be transferred. When the cargo is taken out of the truck, the truck will spring upwards, see in figure 3 the black arrows shown on the roof of the truck. Because the first arm part 14 can slide out of the second arm part 15 the length of the arms can be increased. This allows that the front frame parts 2,3 move (along) upwards, in such a way that the shelter is pushed upwards over a certain distance in a direction parallel to the façade 5. Thereby, see in figure 3 the white arrows shown on and beside the covering, the covering of the shelter moves upwards along with that, more in particular the covering of the sides 8, 9 near or at the façade 5 is movable upwards relative to the façade 5.

The complete shelter therefore moves straight, that is to say in a direction parallel to the façade, straight upwards, without damage.

## Claims

1. Dock shelter, comprising two parallel and vertically arranged front frame parts [2, 3], each of which is connected to a façade [5] by means of at least one arm [4] rotatably connected to the front frame part [2,3] and to the façade [5], whereby a left front frame part [2] forms a supporting element for a left side [8] and a right front frame [3] part forms a supporting element for a right side [9] of the shelter [1], and further comprising in between the frame parts [2, 3] at the upper side thereof a supporting element [10] for the roof [11] of the shelter, comprising a cloth or covering, means being provided by which the length of the arm [4] can be adjusted, **characterised in that** further means are provided by which the covering of the sides [8, 9] near or at the façade [5] is movable upwards relative to the façade [5].

2. Dock shelter according to claim 1, **characterized in that** the arm [4] is formed out of at least two arm parts [14, 15], in which a first arm part [14] with one outer end [12] is connected to the façade [5] and a second arm part [15] with an outer end [13] is connected to a front frame part [2, 3], in which the first and the second arm part [14, 15] are connected to each other, or, are connected to each other by means one or more further arm parts provided in between the first arm part [14] and the second arm part [15], all in such a way, that the arm parts [14, 15] are displaceable relative to each other, and by means of which the length of the arm [4] can be adjusted.

3. Dock shelter according to claim 1 or 2, **characterized in that** the arms [4] are formed by a telescopic construction.

4. Dock shelter according to claim 1, 2 or 3, **characterized in that** the arm parts [14, 15] are formed by metal strips or profiles.

## Patentansprüche

1. Dockschutz, der zwei parallel und vertikal angeordnete Vorderrahmenteile (2, 3) aufweist, die jeweils mittels wenigstens eines Arms (4), der drehbar mit dem Vorderrahmenteil (2, 3) und mit der Fassade (5) verbunden ist, mit einer Fassade (5) verbunden sind, wobei ein linker Vorderrahmenteil (2) ein Stützelement für eine linke Seite (8) und ein rechter Vorderrahmenteil (3) ein Stützelement für eine rechte Seite (9) des Schutzes (1) bildet, und der des Weiteren zwischen den Rahmenteilen (2, 3) an der Oberseite ein Stützelement (10) für das Dach (11) des Schutzes aufweist, das ein Gewebe oder eine Abdeckung aufweist, wobei Mittel vorgesehen sind, durch welche die Länge des Arms (4) verstellt werden kann,
**dadurch gekennzeichnet, dass**
weitere Mittel vorgesehen sind, durch welche die Abdeckung der Seiten (8, 9) nahe oder an der Fassade (5) in Bezug zu der Fassade (5) nach oben bewegt werden kann.

2. Dockschutz nach Anspruch 1, **dadurch gekennzeichnet, dass** der Arm (4) aus wenigstens zwei Armteilen (14, 15) gebildet ist, wobei ein erster Armteil (14) mit einem äußeren Ende (12) mit der Fassade (5) verbunden ist und ein zweiter Armteil (15) mit einem äußeren Ende (13) mit einem Vorderrahmenteil (2, 3) verbunden ist, wobei der erste und der zweite Armteil (14, 15) miteinander verbunden sind oder mittels eines oder mehreren weiteren Armteilen, die zwischen dem ersten Armteil (14) und dem zweiten Armteil (15) vorgesehen sind, miteinander verbunden sind, jeweils derart, dass die Armteile (14, 15) in Bezug zueinander verschiebbar sind, und mit welchen die Länge des Arms (4) verstellt werden kann.

3. Dockschutz nach Anspruch 1 oder 2, **dadurch gekennzeichnet, dass** die Arme (4) in Teleskopkonstruktion hergestellt sind.

4. Dockschutz nach Anspruch 1, 2 oder 3, **dadurch gekennzeichnet, dass** die Armteile (14, 15) durch Metallstreifen oder -profile gebildet sind.

## Revendications

1. Abri de quai de chargement comprenant deux parties formant cadre (2, 3) avant parallèles et agencées verticalement, dont chacune est raccordée à une façade (5) au moyen d'au moins un bras (4) relié de manière rotative à la partie de cadre avant (2, 3) et à la façade (5), la partie formant cadre avant gauche (2) formant un élément de support pour le côté gauche (8) et la partie formant cadre avant droit (3) formant un élément de support pour le côté droit (9) de l'abri (1), et comprenant en outre entre les parties formant cadre (2, 3), au niveau de leur côté supérieur, un élément de support (10) pour la toiture (11) de l'abri, comprenant un tissu ou un habillage, des moyens étant fournis avec lesquels il est possible de régler la longueur du bras (4), **caractérisé en ce que** d'autres moyens sont fournis au moyen desquels il est possible de déplacer, vers le haut par rapport à la façade (5), l'habillage des côtés (8, 9) près ou au niveau de la façade (5).

2. Abri de quai de chargement selon la revendication 1, **caractérisé en ce que** le bras (4) est formé d'au moins deux parties de bras (14, 15), où la première partie de bras (14), avec l'extrémité extérieure (12), est reliée à la façade (5) et la seconde partie de bras (15), avec l'extrémité extérieure (13), est reliée à une partie formant cadre avant (2, 3), où les première et seconde parties de bras (14, 15) sont reliées l'une à l'autre ou sont reliées l'une à l'autre au moyen d'une ou plusieurs autres parties de bras prévues entre la première partie de bras (14) et la seconde partie de bras (15), tout cela de telle sorte que les parties de bras (14, 15) puissent être déplacées l'une par rapport à l'autre et au moyen desquelles il est possible de régler la longueur du bras (4).

3. Abri de quai de chargement selon la revendication 1 ou 2, **caractérisé en ce que** les bras (4) sont formés par une construction télescopique.

4. Abri de quai de chargement selon la revendication 1, 2 ou 3, **caractérisé en ce que** les parties de bras (14, 15) sont formées de bandes ou de profils métallique.
